(19) Europäisches Patentamt

European Patent Office

Office européen des brevets

(11) Publication number: **0 223 436 B1**

# EUROPEAN PATENT SPECIFICATION

(45) Date of publication of patent specification: 02.05.91

(51) Int. Cl.⁵: **H04N 5/45**

(21) Application number: 86308268.1

(22) Date of filing: 23.10.86

(54) Picture-in-picture television receivers.

(30) Priority: 29.10.85 JP 242058/85

(43) Date of publication of application:
27.05.87 Bulletin 87/22

(45) Publication of the grant of the patent:
02.05.91 Bulletin 91/18

(84) Designated Contracting States:
DE FR GB NL

(56) References cited:
DE-A- 2 444 069
US-A- 4 367 484

FUNK-TECHNIK 40(1985), Heft 10, Heidelberg
HELMUT MITSCHKE "Ein Fernsehgerät für
mehrere Videosignale" pages 409,410

IEEE SPECTRUM, May 1985, New York GADI
KAPLAN "All the comforts of home" pages
74-78

(73) Proprietor: SONY CORPORATION
7-35 Kitashinagawa 6-Chome Shinagawa-ku
Tokyo 141(JP)

(72) Inventor: Sarugaku, Toshio
Sony Corp. Patents Division 6-7-35
Kitashinagawa
Shinagawa-ku Tokyo(JP)
Inventor: Motoe, Hisafumi
Sony Corp. Patents Division 6-7-35
Kitashinagawa
Shinagawa-ku Tokyo(JP)
Inventor: Tokuhara, Masaharu
Sony Corp. Patents Division 6-7-35
Kitashinagawa
Shinagawa-ku Tokyo(JP)
Inventor: Hongu, Masayuki
Sony Corp. Patents Division 6-7-35
Kitashinagawa
Shinagawa-ku Tokyo(JP)

(74) Representative: Cotter, Ivan John et al
D. YOUNG & CO. 10 Staple Inn
London WC1V 7RD(GB)

## Description

This invention relates to picture-in-picture television receivers for reproducing two different pictures simultaneously on a common display screen (such as a display screen of a cathode ray tube), and to methods of reproducing two different pictures simultaneously on a common display screen of a picture-in-picture television receiver.

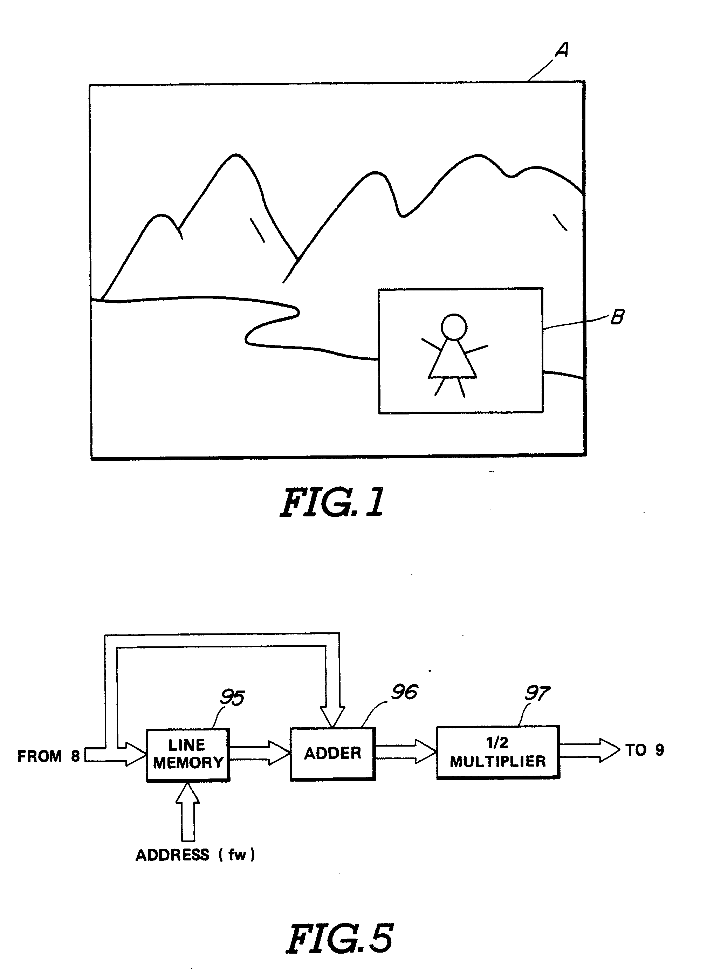

Figure 1 of the accompanying drawings shows a display screen of a previously proposed picture-in-picture (P in P) television receiver on which an A-channel picture and a B-channel picture are simultaneously displayed. The B-channel picture (hereinafter referred to as a "subpicture") is inserted at a predetermined area of the A-channel picture (hereinafter referred to as a "main picture") by reducing (compressing) both the lateral and vertical dimensions of the subpicture to 1/3, for instance, of those of the main picture. In the P in P television receiver, if the size of the subpicture is reduced to 1/3, for instance, the subpicture signal is first subjected to analog to digital (A-D) conversion, and the horizontal and vertical scanning lines then are extracted in a ratio of 1 out of 3 before being written in a picture memory. The subpicture signal is written in the memory, in response to a clock signal synchronised with a synchronising signal of the subpicture signal, while the subpicture signal is read out from the memory, at a speed which is three times higher than that employed in writing the signal, in response to a clock signal synchronised with a synchronising signal of the main picture signal.

Since the sampling frequency on the subpicture side is different from that on the main picture side, it is inevitably necessary to convert the sampling frequency somewhere in the circuitry of the P in P television receiver.

In more detail, a subpicture signal is converted from an analog signal to a digital signal, stored in a memory via a write process circuit, read from the memory, and converted from a digital signal to an analog signal. During these operations, successive portions of the subpicture signal, each composed of a plurality of bits of the digital signal arranged in series, are processed. However, since the time during which variation in signal data becomes stable is different among the bit of the signal making up the plurality, there is a problem in that unstable data durations or intervals occur before the data represented by all of the bits of each plurality becomes stable.

US Patent US-A-4 367 484 discloses a picture-in-picture television receiver according to the precharacterising part of claim 1 of this specification and a method of picture reproduction according to the precharacterising part of claim 4 of this specification.

According to one aspect of the invention there is provided a picture-in-picture television receiver for reproducing two different pictures simultaneously on a common display screen such that one of said pictures ("subpicture") is inserted in a predetermined area of the other of said pictures ("main picture"), the receiver comprising:

memory means;

write processing circuit means for writing a subpicture signal representing the subpicture into the memory means under the control of a synchronising signal of the subpicture signal;

read processing circuit means for reading the signal stored in the memory means under the control of a synchronising signal of a main picture signal representing the main picture; and

means for combining the read signal with the main picture signal to produce a signal for display;

the receiver being characterised in that:

an analog-to-digital converter means is provided for converting an analog subpicture signal into a digital subpicture signal; and

the write processing circuit means comprises:

first latch circuit means for latching the digital subpicture signal in response to a subpicture clock signal which is in synchronism with the subpicture synchronising signal;

second latch circuit means for latching an output signal of the first latch circuit means in response to a main picture clock signal which is in synchronism with the main picture synchronising signal, the second latch circuit means being connected to the memory means whereby an output signal of the second latch circuit means constitutes the subpicture signal written into the memory means;

series/parallel converter means connected between the analog-to-digitalconverter means and the first latch circuit means for receiving a predetermined number of bits of the digital subpicture signal in response to the subpicture clock signal, the series/parallel converter means being operative to output a conversion end signal when series/parallel conversion has been effected for said predetermined number of bits; and

an edge detector operative to detect a trailing edge of said conversion end signal and responsive thereto to cause the second latch circuit means to latch said output signal of the first latch circuit means only when a predetermined number of periods of the main picture clock signal have elapsed after the trailing edge of the conversion end signal has been detected by the edge detector.

According to a second aspect of the invention there is provided a method of reproducing two different pictures simultaneously on a common display screen such that one of said pictures ("subpicture") is inserted in a predetermined area of the other of said pictures ("main picture), the method comprising:

writing a subpicture signal representing the subpicture into memory means under the control of a synchronising signal of the subpicture signal;

reading the signal stored in the memory means under the control of a synchronising signal of a main picture signal representing the main picture; and

combining the read signal with the main picture signal to produce a signal for display;

the method being characterised in that:

an analog subpicture signal is converted into a digital subpicture signal; and

the writing step comprises:

latching the digital subpicture signal in response to a subpicture clock signal which is in synchronism with the subpicture synchronising signal;

latching an output signal resulting from the first-mentioned latching operation in response to a main picture clock signal which is in synchronism with the main picture synchronising signal, an output signal resulting from the second-mentioned latching operation constituting the subpicture signal written into the memory means;

series/parallel converting the digital subpicture signal prior to the first-mentioned latching operation in response to the subpicture clock signal and outputting a conversion end signal when series/parallel conversion has been effected for a predetermined number of bits of the digital subpicture signal; and

detecting a trailing edge of said conversion end signal and causing the second-mentioned latching operation to be effected only when a predetermined number of periods of the main picture clock signal have elapsed after the trailing edge of the conversion end signal has been detected.

A preferred embodiment of the present invention described in detail hereinbelow provides a picture-in-picture television receiver which can eliminate the above-mentioned unstable data durations or intervals and can stably convert the sampling frequency of the subpicture signal to that of the main picture signal. In the circuit configuration of the preferred embodiment of the present invention, one latch circuit is synchronised with a subpicture and the other latch circuit is synchronised with a main picture, whereby it is possible to eliminate the subpicture data signal being latched to the main picture side during the unstable data durations or intervals, so that the conversion of the sampling frequency can be effected stably from the subpicture side to the main picture side.

The invention will now be further described, by way of illustrative and non-limiting example, with reference to the accompanying drawings, in which:

Figure 1 shows a screen of a picture-in-picture television receiver;

Figure 2 is a schematic block diagram showing an exemplary circuit of a picture-in-picture television receiver in which the present invention can be embodied;

Figure 3 is a schematic block diagram showing a write processing circuit incorporated in the circuit shown in Figure 1 to form a picture-in-picture television receiver that is a preferred embodiment of the invention;

Figure 4 is a timing chart for the write processing circuit shown in Figure 3; and

Figure 5 is a block diagram showing an embodiment of a picture quality improvement circuit which can be connected to the write processing circuit shown in Figure 3.

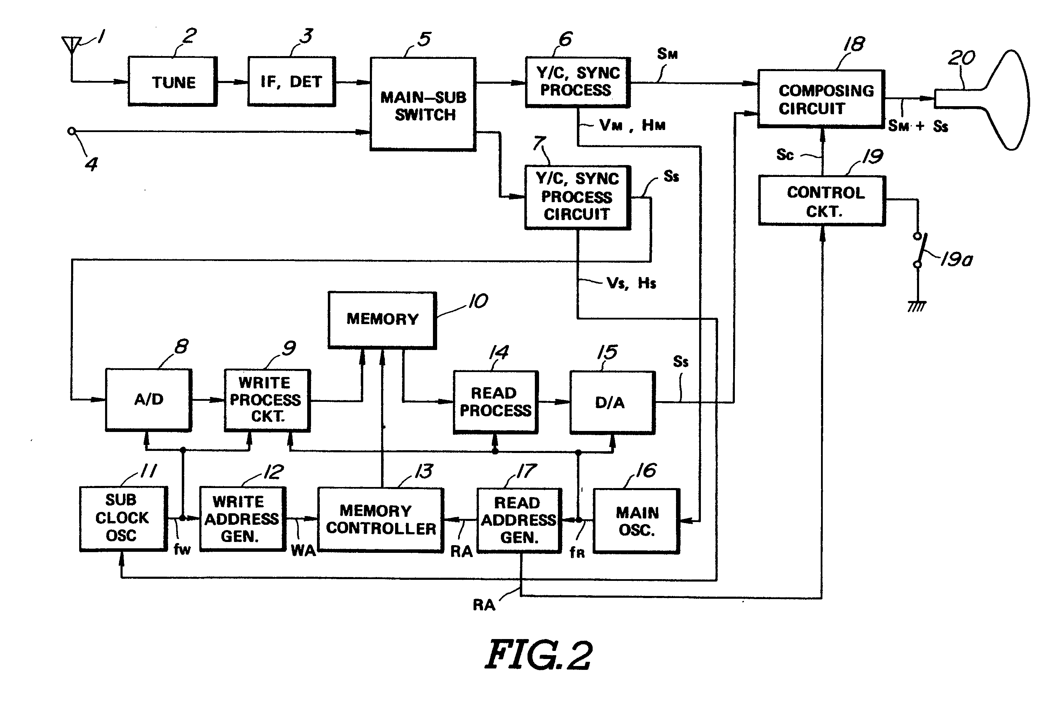

Figure 2 shows an exemplary circuit of a picture-in-picture television receiver, the circuit comprising an antenna (aerial) 1, a tuning circuit 2, an intermediate frequency amplifier and video detecting circuit 3, and a composite video signal input terminal 4 to which a video signal, for example a playback signal from a video tape recorder (VTR), can be supplied. A main-sub switching circuit 5 selects one of a video signal from the circuit 3 and a video signal from the terminal 4 as a main picture and the other as a subpicture. The main picture video signal obtained from the switching circuit 5 is applied to a Y/C processing and synchronising signal processing circuit 6 which provides a main picture video signal $S_M$, a main picture vertical synchronising signal $V_M$, and a main picture horizontal synchronising signal $H_M$. In addition, the subpicture signal obtained from the switching circuit 5 is applied to a Y/C processing and synchronising signal processing circuit 7 to provide a subpicture video signal $S_S$, a subpicture vertical synchronising signal $V_S$, and a subpicture horizontal synchronising signal $H_S$.

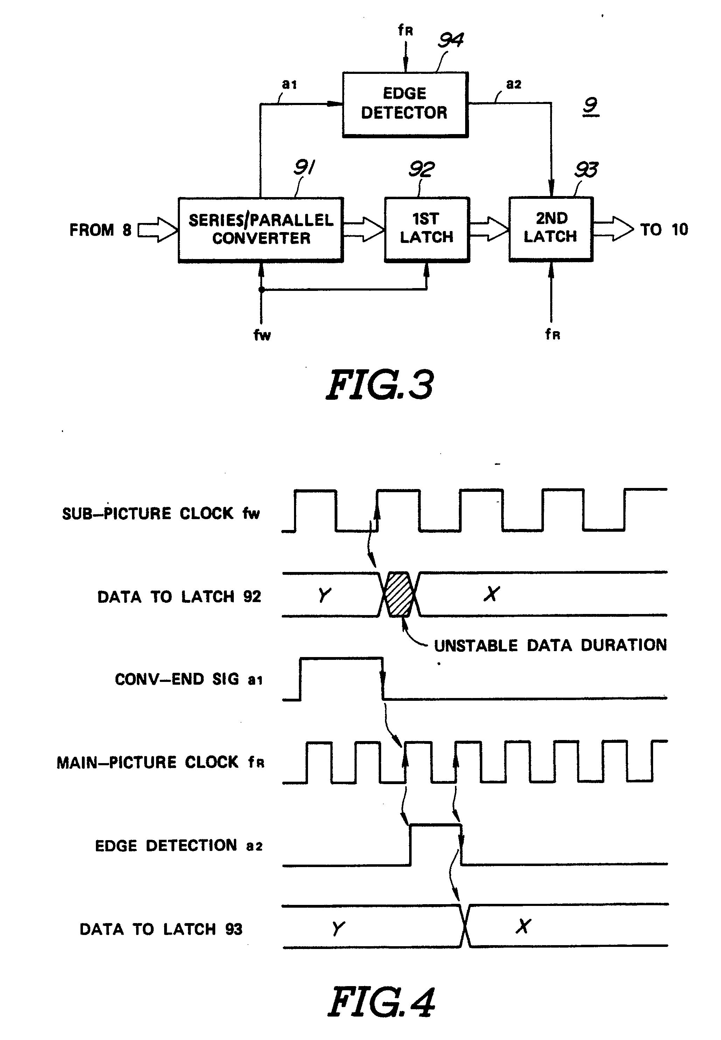

The subpicture video signal $S_S$ is applied to an analog to digital (A-D) converter 8 which converts it into a digital signal. The digital signal is written in an image memory 10 through a write processing circuit 9. If the subpicture is reduced in size in both the vertical and horizontal directions to 1/3 of the size of the main picture, the horizontal and vertical scanning lines are extracted by the write processing circuit 9 in a ratio of 1 out of 3 and then written in the memory 10. By virtue of this processing operation, effective picture information made up of 64 scanning lines per one field, for instance, is written in the memory 10. Further, in addition to the above-mentioned processing operation, the write processing circuit 9 converts a sampling frequency in a manner described hereinbelow with reference to Figure 3.

A subpicture clock oscillator or generator 11 generates a clock pulse signal having a frequency ("write frequency") fw in synchronism with the subpicture vertical and horizontal synchronising signals $V_S$ and $H_S$. On the basis of the clock pulse signal having the frequency fw, a write address generator 12 generates write address signals WA representing write addresses from "0" to "2047". The write address signals WA are supplied to the memory 10 via a memory controller or control circuit 13.

Data read from the memory 10 is applied to a digital-to-analog (D-A) converter 15 via a read processing circuit 14 to convert the digital subpicture signal to the original analog video signal $S_S$.

A main picture clock oscillator or generator 16 generates a clock pulse signal having a frequency ("read frequency") $f_R$ in synchronism with the main picture vertical and horizontal synchronising signals $V_M$ and $H_M$. On the basis of these signals, a read address generator 17 generates read address signals RA representing read addresses from "0" to "2047". The read address signals RA are supplied to the memory 10 via the memory control circuit 13. When the subpicture is reduced to 1/3 of the size of the main picture, the above-mentioned reading operation is executed at a speed three times higher than that employed for writing. That is, information of one scanning line H is speedily read during a period of 1/3H. Further, the write frequency fw is selected to be 4/3fsc and the read frequency $f_R$ is selected to be 2fsc, for instance, where fsc denotes a subcarrier frequency. In this case, the read frequency $f_R$ is selected to be 3/2 times (and not three times) the write frequency fw. This is because the A-D converter 8 converts a luminance signal and a colour difference signal from the circuit 7 in a time divisional manner as is well known in the art.

The subpicture video signal $S_S$ obtained by the D-A converter 15 is applied to a composing circuit 18 together with the main picture video signal $S_M$ obtained by the processing circuit 6. The composing circuit 18 is controlled by a switching signal $S_C$ applied from a control circuit 19. Therefore, it is possible for the composing circuit 18 to provide a composite signal $S_M + S_S$, in which the signal $S_S$ is inserted into a predetermined area of the signal $S_M$, the composite signal being supplied to a picture tube 20. In accordance with the above-described circuit configuration, the subpicture B, reduced in size by a factor of 1/3 both vertically and horizontally, is reproduced at a predetermined area of the main picture A, as shown in Figure 1, on the picture tube 20.

A switch 19a is provided for the control circuit 19. When the switch 19a is manually turned on, the subpicture B can be erased.

The above-mentioned sampling frequency conversion processing operation carried out by the write processing circuit 9 will now be described with reference to Figures 3 and 4.

In Figure 3, items of data (words) each comprising 5 bits arranged in series, for instance, are inputted from the A-D converter 8 to a series to parallel converter 91. In the converter 91, for instance, six 5-bit memory circuits are connected in series. The converter 91 and a succeeding stage in the form of a 30-bit latch circuit 92 are activated in response to the subpicture clock signal having the frequency fw, and a further succeeding stage in the form of a latch circuit 93 is activated in response to the main picture clock signal having the frequency $f_R$.

In operation, 30 bits of data X, Y are sequentially inputted to the latch circuit 92 in a ratio of one out of six pulses of the subpicture clock signal. The time during which the data becomes stable without variation is different for each bit of the 30 bits of data, so that an unstable data duration or interval occurs until all of the 30 bits become stable.

When the converter 91 has performed series-to-parallel data conversion for six 5-bit words (a total of 30 bits), a conversion-end signal $a_1$ is outputted by the converter 91. The trailing edge of the signal $a_1$ is detected by an edge detector or detection circuit 94 as an edge detection signal $a_2$ in synchronism with the main picture clock signal.

At a point in time when one period of the main picture clock signal has elapsed from the leading edge of the edge detection signal $a_2$, the succeeding stage latch circuit 93 is activated so as to latch the data of the latch circuit 92. Since the above-mentioned unstable data duration or interval is usually shorter than one period of the main picture clock signal, the latch circuit 93 never fetches the data from the latch circuit 92 within the unstable data duration or interval.

Therefore, it is possible stably to convert the data from the sampling frequency of the subpicture to that of the main picture.

This means that the memory 10 can be operated in synchronism with the main picture clock signal having the frequency $f_R$ during both the writing and reading periods, so that any data can be handled without the influence of the unstable data durations or intervals mentioned above.

Further, it should be understood that the operation of fetching data from the latch circuit 92 to the latch circuit 93 can be selected at any point in time within six periods of the main picture clock signal. Further, the output of the latch circuit 93 is written in the memory 10 after a necessary processing operation, in which one scanning line is extracted from three scanning lines, has been completed.

A method of solving another problem associated with the circuit shown in Figure 2 will now be described.

As described above, when the subpicture is reduced in size by a factor of 1/3, only signals corresponding to one scanning line are used out of the signals corresponding to three scanning lines. In other words, in one field of the subpicture signal, only the 3rd, 6th, 9th... scanning lines are used out of the 1st to nth scanning lines, the other scanning lines not being used. Therefore, a problem arises in that roughness of the subpicture inserted in the main picture is conspicuous in the vertical direction.

Figure 5 shows an embodiment of a picture quality improvement circuit for solving at least partially the above-mentioned problem. The picture quality improving circuit is connected between the A-D converter 8 and the write processing circuit 9.

In this embodiment, a scanning line is added to a previous scanning line, and a resultant added or addition output is averaged by multiplication by 1/2. For instance, in one field of the subpicture signal, the 1st scanning line is discarded, the 2nd and 3rd scanning lines are added together, and the addition output thereof is divided by 2.

Referring to Figure 5, when the 2nd scanning line of the digitised subpicture video signal is inputted from the A-D converter 8 as input data, the data is written in a line memory 95 by setting it in a write mode. Next, when the 3rd scanning line of the signal is inputted, data is read from the line memory 95 and the data read from the line memory and the data of the 3rd scanning line are added by an adder 96. Thereafter, an addition output of this adder 96 is applied to a 1/2 multiplier 97 for averaging. Then, the 4th scanning line is discarded, and the same operation is repeated from the 5th scanning line.

As described above, since only the writing and reading operations are performed alternately in the line memory 95, it is sufficient for the speed of operation of the line memory 95 to correspond to the frequency fw of the subpicture clock signal. Therefore, it is possible to use a low-priced low-speed line memory 95.

In spite of the simple circuit configuration, it is possible to eliminate the unstable data duration or interval, and stably to convert the sampling frequency of the subpicture signal to that of the main picture signal.

## Claims

1. A picture-in picture television receiver for reproducing two different pictures simultaneously on a common display screen such that one of said pictures ("subpicture") is inserted in a predetermined area of the other of said pictures ("main picture"), the receiver comprising: memory means (10);

write processing circuit means (9) for writing a subpicture signal representing the subpicture into the memory means (10) under the control of a synchronising signal of the subpicture signal;

read processing circuit means (14) for reading the signal stored in the memory means (10) under the control of a synchronising signal of a main picture signal representing the main picture; and

means (18) for combining the read signal with the main picture signal to produce a signal for display;

the receiver being characterised in that:

an analog-to-digital converter means (8) is provided for converting an analog subpicture signal into a digital subpicture signal; and

the write processing circuit means (9) comprises:

first latch circuit means (92) for latching the digital subpicture signal in response to a subpicture clock signal (fw) which is in synchronism with the subpicture synchronising signal;

second latch circuit means (93) for latching an output signal of the first latch circuit means (92) in response to a main picture clock signal ($f_R$) which is in synchronism with the main picture synchronising signal, the second latch circuit means (93) being connected to the memory means (10) whereby an output signal of the second latch circuit means constitutes the subpicture signal written into the memory means;

series/parallel converter means (91) connected between the analog-to-digital converter means (8) and the first latch circuit means (92) for receiving a predetermined number of bits of the digital subpicture signal in response to the subpicture clock signal (fw), the series/parallel converter means (91) being operative to output a conversion end signal (a1) when series/parallel conversion has been effected for said predetermined number of bits; and

an edge detector (94) operative to detect a trailing edge of said conversion end signal (a1) and responsive thereto to cause the second latch circuit means (93) to latch said output signal of the first latch circuit means (91) only when a predetermined number of periods of the main picture clock signal ($f_R$) have elapsed after the trailing edge of the conversion end signal (a1) has been detected by the edge detector (94).

2. A picture-in-picture television receiver according to claim 1, wherein said predetermined number of periods of the main picture clock signal ($f_R$) is one.

3. A picture-in-picture television receiver according to claim 1 or claim 2, which comprises picture quality improvement circuit means connected between the analog-to-digital converter means (8) and the series/parallel converter means (91), the picture quality improvement circuit means comprising:

(a) line memory means (95) for storing predetermined lines of the digital subpicture signal in response to the subpicture clock signal (fw);

(b) adder means (96) for adding a subpicture signal line read from the line memory means (95) to a succeeding subpicture signal line; and

(c) a 1/2 multiplier means (97) for averaging the added subpicture lines.

4. A method of reproducing two different pictures simultaneously on a common display screen such that one of said pictures ("subpicture") is inserted in a predetermined area of the other of said pictures ("main picture), the method comprising:

writing a subpicture signal representing the subpicture into memory means (10) under the control of a synchronising signal of the subpicture signal;

reading the signal stored in the memory means (10) under the control of a synchronising signal of a main picture signal representing the main picture; and

combining (18) the read signal with the main picture signal to produce a signal for display;

the method being characterised in that:

an analog subpicture signal is converted (8) into a digital subpicture signal; and

the writing step (9) comprises:

latching (92) the digital subpicture signal in response to a subpicture clock signal (fw) which is in synchronism with the subpicture synchronising signal;

latching (93) an output signal resulting from the first-mentioned latching operation in response to a main picture clock signal (fR) which is in synchronism with the main picture synchronising signal, an output signal resulting from the second-mentioned latching operation constituting the subpicture signal written into the memory means (10);

series/parallel converting (91) the digital subpicture signal prior to the first-mentioned latching operation (91) in response to the subpicture clock signal (fw) and outputting a conversion end signal (a1) when series/parallel conversion has been effected for a predetermined number of bits of the digital subpicture signal; and detecting a trailing edge of said conversion end signal (a1) and causing the second-mentioned latching operation (93) to be effected only when a predetermined number of periods of the main picture clock signal (fR) have elapsed after the trailing edge of the conversion end signal (a1) has been detected.

5. A method according to claim 1, wherein said predetermined number of periods of the main picture clock signal (fR)is one.

6. A method according to claim 4 or claim 5, which comprises effecting a picture quality improvement operation between the analog-to-digital conversion operation (8) and the series/parallel conversion operation (91), the picture quality improvement operation comprising:

(a) storing (95) predetermined lines of the digital subpicture signal in response to the subpicture clock signal (fw);

(b) reading a stored subpicture signal line and adding (96) the stored subpicture signal line to a succeeding subpicture signal line; and

(c) averaging the added subpicture lines.

## Revendications

1. Un récepteur de télévision à incrustation, prévu pour reproduire simultanément deux images différentes sur un écran de visualisation commun, de façon que l'une des images ("sous-image") soit incrustée dans une zone prédéterminée de l'autre image ("image principale") le récepteur comprenant :

des moyens de mémoire (10);

un circuit de traitement d'écriture (9) pour écrire dans les moyens de mémoire (10) un signal de sous-image représentant la sous-image, sous la commande d'un signal de synchronisation du signal de sous-image;

un circuit de traitement de lecture (14) pour lire le signal qui est enregistré dans les moyens de mémoire (10), sous la commande d'un signal de synchronisation d'un signal d'image principale représentant l'image principale; et

des moyens (18) pour combiner le signal de lecture avec le signal d'image principale, pour produire un signal pour la visualisation;

le récepteur étant caractérisé en ce que :

un convertisseur analogique-numérique (8) est incorporé pour convertir un signal de sous-image analogique en un signal de sous-image numérique; et

le circuit de traitement d'écriture (9) comprend:

un premier circuit de bascules (92) pour mémoriser le signal de sous-image numérique sous la dépendance d'un signal d'horloge de sous-image (fw) qui est en synchronisme avec le signal de synchronisation de sous-image;

un second circuit de bascules (93) pour mémoriser un signal de sortie du premier circuit de bascules (92), sous la dépendance d'un signal d'horloge d'image principale ($f_R$) qui est en synchronisme avec le signal de synchronisation d'image principale, le second circuit de bascules (93) étant connecté aux moyens de mémoire (10), grâce à quoi un signal de sortie du second circuit de bascules constitue le signal de sous-image qui est écrit dans les moyens de mémoire;

un convertisseur série/parallèle (91) connecté entre le convertisseur analogique-numérique (8) et le premier circuit de bascules (92), pour recevoir un nombre de bits prédéterminé du signal de sous-image numérique, sous la dépendance du signal d'horloge de sous-image (fw), le convertisseur série/parallèle (91) émettant un signal de fin de conversion (a1) lorsque la conversion série/parallèle a été effectuée pour le nombre de bits prédéterminé; et

un détecteur de front (94) qui détecte un front arrière du signal de fin de conversion (a1) et qui réagit à ce front en commandant au second circuit de bascules (93) de mémoriser le signal de sortie du premier circuit de bascules (91), seulement lorsqu'un nombre prédéterminé de périodes du signal d'horloge d'image principale ($f_R$) se sont écoulées après que le détecteur de front (94) a détecté le front arrière du signal de fin de conversion (a1).

2.  Un récepteur de télévision à incrustation selon la revendication 1, dans lequel le nombre prédéterminé de périodes du signal d'horloge d'image principale ($f_R$) est égal à un.

3.  Un récepteur de télévision à incrustation selon la revendication 1 ou la revendication 2, comprenant un circuit d'amélioration de la qualité de l'image qui est connecté entre le convertisseur analogique-numérique (8) et le convertisseur série/parallèle (91), le circuit d'amélioration de la qualité de l'image comprenant :

    (a) des moyens de mémoire de ligne (95) qui sont destinés à enregistrer des lignes prédéterminées du signal de sous-image numérique, sous la dépendance du signal d'horloge de sous-image (fw);

    (b) des moyens additionneurs (96) qui sont destinés à additionner une ligne de signal de sous-image qui est lue dans les moyens de mémoire de ligne (95) et une ligne de signal de sous-image suivante; et

    (c) des moyens multiplicateurs par 1/2 (97) qui sont destinés à calculer la moyenne des lignes de sous-image additionnées.

4.  Un procédé de reproduction simultanée de deux images différentes sur un écran de visualisation commun, de façon que l'une des images ("sous-image") soit inorustée dans une zone prédéterminée de l'autre image ("image principale"), le procédé comprenant les opérations suivantes :

    on écrit dans des moyens de mémoire (10) un signal de sous-image représentant la sous-image, sous la commande d'un signal de synchronisation du signal de sous-image;

    on lit le signal qui est enregistré dans les moyens de mémoire (10), sous la commande d'un signal de synchronisation du signal d'image principale représentant l'image principale; et

    on combine (18) le signal lu avec le signal d'image principale, pour produire un signal pour la visualisation;

    le procédé étant caractérisé en ce que :

    on convertit (8) un signal de sous-image analogique en un signal de sous-image numérique; et

    l'opération d'écriture (9) comprend les opérations suivantes :

    on mémorise (92) le signal de sous-image numérique, sous la dépendance d'un signal d'horloge de sous-image (fw) qui est en synchronisme avec le signal de synchronisation de sous-image;

    on mémorise (93) un signal de sortie résultant de l'opération de mémorisation mentionnée en premier, sous la dépendance d'un signal d'horloge d'image principale ($f_R$) qui est en synchronisme avec le signal de synchronisation d'image principale, un signal de sortie résultant de l'opération de mémorisation mentionnée en second constituant le signal de sous-image qui est écrit dans les moyens de mémoire (10);

    on applique une conversion série/parallèle (91) au signal de sous-image numérique, avant l'opération de mémorisation mentionnée en premier (91), sous la dépendance du signal d'horloge de sous-image (fw), et on émet un signal de fin de conversion (a1) lorsque la conversion série/parallèle a été effectuée pour un nombre de bits prédéterminé du signal de sous-image numérique; et

    on détecte un front arrière du signal de fin de conversion (a1) et on commande l'accomplissement de l'opération de mémorisation mentionnée en second (93) seulement lorsqu'un nombre prédéterminé de périodes du signal d'horloge d'image principale ($f_R$) se sont écoulées après la détection du front arrière du signal de fin de conversion (a1).

5. Un procédé selon la revendication 1, dans lequel le nombre prédéterminé de périodes du signal d'horloge d'image principale ($f_R$) est égal à un.

6. Un procédé selon la revendication 4 ou la revendication 5, qui comprend l'accomplissement d'une opération d'amélioration de la qualité de l'image, entre l'opération de conversion analogique-numérique (8) et l'opération de conversion série/parallèle (91), l'opération d'amélioration de la qualité de l'image comprenant les opérations suivantes :

    (a) on enregistre (95) des lignes prédéterminées du signal de sous-image numérique, sous la dépendance du signal d'horloge de sous-image (fw);

    (b) on lit une ligne de signal de sous-image enregistrée et on additionne (96) la ligne de signal de sous-image enregistrée et une ligne de signal de sous-image suivante; et

    (c) on fait la moyenne des lignes de sous-image additionnées.

## Ansprüche

1. Bild-in-Bild-Fernsehempfänger zur simultanen Wiedergabe zweier verschiedener Fernsehbilder auf einem gemeinsamen Bildschirm, wobei eines dieser Bilder (Unterbild) in einem vorbestimmten Bereich des anderen Bildes (Hauptbild) eingesetzt ist, mit

einer Speicheranordnung (10),

einer Schreib-Prozessor-Schaltungsanordnung (9) zum Einschreiben eines das Unterbild repräsentierenden Unterbild-Signals in die Speicheranordnung (10) unter dem Steuereinfluß eines Synchronisiersignals des Unterbild-Signals,

einer Lese-Prozessor-Schaltungsanordnung (14) zum Auslesen des in der Speicheranordnung (10) gespeicherten Signals unter dem Steuereinfluß eines Synchronisiersignals eines das Hauptbild repräsentierenden Hauptbild-Signals, und

einer Einrichtung (18) zum Kombinieren des ausgelesenen Signals mit dem Hauptbild-Signal zur Erzeugung eines Signale für die Anzeige,

dadurch gekennzeichnet,

daß eine Analog/Digital-Wandlereinrichtung (8) zum Umwandeln eines analogen Unterbild-Signals in ein digitales Unterbild-Signal vorgesehen ist, und

daß die Schreib-Prozessor-Schaltungsanordnung (9) aufweist:

    - eine erste Halte-Schaltung (92) zum Halten des digitalen Unterbild-Signals in Abhängigkeit von einem Unterbild-Taktsignal ($f_w$), das mit dem Unterbild-Synchronisiersignal synchronisiert ist,

    - eine zweite Halte-Schaltung (93) zum Halten des Ausgangssignal der ersten Halte-Schaltung (92) in Abhängigkeit von einem Hauptbild-Taktsignal ($f_R$), des mit dem Hauptbild-Synchronisiersignal synchronisiert ist, wobei die zweite Halte-Schaltung (93) mit der Speicheranordnung (10) verbunden ist, so daß das Ausgangssignal der zweiten Halte-Schaltung (93) das in die Speicheranordnung (10) eingeschriebene Unterbild-Signal darstellt,

    - eine zwischen der Analog/Digital-Wandlereinrichtung (8) und der ersten Halte-Schaltung (92) angeordnete Serien/Parallel-Wandlereinrichtung (91) zur Aufnahme einer vorbestimmten Anzahl von Bits des digitalen Unterbild-Signals in Abhängigkeit von dem Unterbild-Taktsignal ($f_w$), wobei die Serien/Parallel-Wandlereinrichtung (91) bewirkt, daß ein Umwandlungs-Endesignal (a1) ausgegeben wird, wenn die Serien/Parallel-Wandlung für die gesamte vorbestimmte Anzahl von Bits durchgeführt ist, und

    - einen Flankendetektor (94), der die Vorderflanke des Umwandlungs-Endesignal (a1) ermittelt und in Abhängigkeit hiervon die zweite Halte-Schaltung (92) nur denn zum Halten des Ausgangssignals der ersten Halte-Schaltung (91) veranlaßt, wenn nach der Ermittlung der Vorderflanke des Umwandlungs-Endesignals (a1) durch den Flankendetektor (94) eine vorbestimmte Anzahl von Perioden des Hauptbild-Taktsignals ($f_R$) vergangen ist.

2. Bild-in-Bild-Fernsehempfänger nach Anspruch 1, bei dem die vorbestimmte Anzahl von Perioden des Hauptbild-Taktsignals ($f_R$) gleich eins ist.

3. Bild-in-Bild-Fernsehempfänger nach Anspruch 1 oder 2, mit einer zwischen der Analog/Digital-Wandlereinrichtung (8) und der Serien/Parallel-Wandlereinrichtung (91) angeordneten Schaltungsanordnung zur Verbesserung der Bildqualität, die folgende Teile aufweist:

    (a) einen Zeilenspeicher (95) zur Speicherung vorbestimmter Zeilen des digitalen Unterbild-Signals in Abhängigkeit von dem Unterbild-Taktsignal ($f_w$),

(b) eine Addiereinrichtung (96) zum Addieren einer aus dem Zeilenspeicher (95) ausgelesenen Unterbild-Signalzeile zu einer nachfolgenden Unterbild-Signalzeile und

(c) eine 1/2-Multipliziereinrichtung (97) zur Mittelwertbildung der addierten Unterbildzeilen.

4. Verfahren zum Wiedergeben zweier verschiedener Fernsehbilder auf einem gemeinsamen Bildschirm, wobei eines dieser Bilder (Unterbild) in einem vorbestimmten Bereich des anderen Bildes (Heuptbild) eingefügt ist, mit den Verfahrensschritten:

Einschreiben eines das Unterbild repräsentierenden Unterbild-Signals in eine Speicheranordnung (10) unter dem Steuereinfluß eines Synchronisiersignals des Unterbild-Signals,

Auslesen des in der Speicheranordnung (10) gespeicherten Signals unter dem Steuereinfluß eines Synchronisiersignals eines das Hauptbild repräsentierenden Hauptbild-Signals, und

Kombinieren (18) des ausgelesenen Signals mit dem Hauptbild-Signal zur Erzeugung eines Signals für die Anzeige,

dadurch gekennzeichnet,

daß ein analoges Unterbild-Signal in ein digitales Unterbild-Signal umgewandelt wird (8) und daß der Verfahrensschritt des Schreibens (9) folgende Funktionen umfaßt:

- Halten (92) des digitalen Unterbild-Signals in Abhängigkeit von einem Unterbild-Taktsignal ($f_w$), das mit dem Unterbild-Synchronisiersignal synchronisiert ist,

- Halten (93) des aus dem ersten Haltsvorgang resultierenden Ausgangssignals in Abhängigkeit von einem Hauptbild-Taktsignal ($f_R$), das mit dem Hauptbild-Synchronisiersignal synchronisiert ist, wobei das aus dem zweiten Haltevorgang (93) resultierende Ausgangssignal das in die Speicheranordnung (10) eingeschriebene Unterbild-Signal darstellt,

- Serien/Parallel-Wandlung (91) des digitalen Unterbild-Signals vor dem ersten Haltevorgang (92) in Abhängigkeit von dem Unterbild-Taktsignal ($f_w$) und Ausgabe eines Umwandlungs-Endesignals (a1) wenn die Serien/Parallel-Wandlung für die gesamte vorbestimmte Anzahl von Bits des digitalen Unterbild-Signals durchgeführt ist und

- Ermitteln der Vorderflanke des Umwandlungs-Endesignal (a1) und Veranlassen des zweiten Haltevorgangs (93) nur dann, wenn nach der Ermittlung der Vorderflanke des Umwandlungs-Endesignals (a1) eine vorbestimmte Anzahl von Perioden des Hauptbild-Taktsignals ($f_R$) vergangen ist.

5. Verfahren nach Anspruch 4, bei dem die vorbestimmte Anzahl von Perioden des Hauptbild-Taktsignals ($f_R$) gleich eins ist.

6. Verfahren nach Anspruch 4 oder 5, bei dem zwischen der Analog/Digital-Wandlung (8) und der Serien/Parallel-Wandlung (91) ein Verarbeitungsvorgang zur Verbesserung der Bildqualität durchgeführt wird, der folgendes umfaßt:

(a) Speichern (95) vorbestimmter Zeilen des digitalen Unterbild-Signals in Abhängigkeit von dem Unterbild-Taktsignal ($f_w$),

(b) Auslesen einer gespeicherten Unterbild-Signalzeile und Addieren (96) der gespeicherten Unterbild-Signalzeile zu einer nachfolgenden Unterbild-Signalzeile und

(c) Mittelwertbildung der addierten Unterbildzeilen.

*FIG. 1*

*FIG.5*

**FIG.2**

EP 0 223 436 B1

**FIG.3**

**FIG.4**